# FASCICULE DE BREVET EUROPEEN

(11) **EP 0 591 044 B1**
(45) Date de publication et mention de la délivrance du brevet: **22.10.1997**
(21) Numéro de dépôt: 93402367.2
(22) Date de dépôt: 28.09.1993
(51) Int. Cl.: G06F 3/00, G06F 3/033, G06F 3/023

(54) **Dispositif d'exécution de commandes virtuelles autoadaptatif**
Selbsteinstellende Vorrichtung zur Ausführung virtueller Befehlen
Selfadjusting device for executing virtual commands

(30) Priorité: 02.10.1992 FR 9211677
(43) Date de publication de la demande: 06.04.1994
(73) Titulaire: SEXTANT AVIONIQUE, F-92360 Meudon-la-Forêt (FR)
(72) Inventeur: Favot, Jean-Jacques, F-92402 Courbevoie Cédex (FR); Perbet, Jean-Noel, F-92402 Courbevoie Cédex (FR); Barbier, Bruno, F-92402 Courbevoie Cédex (FR); Lach, Patrick, F-92402 Courbevoie Cédex (FR)
(74) Mandataire: Benoit, Monique

(56) Documents cités:
- EP-A- 0 215 203
- SYSTEMS AND COMPUTERS IN JAPAN vol. 23, no. 3 , 1992 , NEW YORK, US pages 38 - 48 T. TAKAHASHI ET F. KISHINO 'A Hand Gesture Recognition Method and Its Application'

## Description

La présente invention concerne un dispositif d'exécution de commandes virtuelles autoadaptatif. Elle s'applique notamment à des systèmes d'interaction, chaque canal étant par exemple utilisé suivant plusieurs modes. Plus généralement, elle s'applique à des systèmes n'ayant pas de canal préférentiel de dialogue, chaque canal d'interaction étant utilisé par exemple au mieux de ses performances.

Les systèmes d'interaction homme-machine actuels utilisent essentiellement des moyens de dialogue conventionnels tels qu'un clavier, une souris ou une boule par exemple. Des commandes virtuelles existent généralement sur les micro-ordinateurs notamment sous forme de commandes graphiques. L'utilisation des moyens de dialogue conventionnels précités rendent assez lourde, peu ergonomique, l'utilisation des commandes virtuelles, qu'elles soient opérationnelles sur des micro-ordinateurs ou sur des systèmes d'interaction plus complexes. Avec ces moyens de dialogue actuels, ces commandes nécessitent, pour fonctionner, de multiples opérations de sélections, réalisées généralement à l'aide d'une souris. Par exemple, l'opération de changement de taille d'un objet graphique, nécessite de sélectionner un outil, le curseur, puis de sélectionner l'objet, puis de sélectionner sur un rectangle représentant la taille de l'objet un des côtés, et enfin de le déplacer dans une direction appropriée. Cette multitude d'opérations, et leur complexité, diminuent la rapidité de réalisation de la commande. Le manque de souplesse d'utilisation de ces commandes virtuelles est encore accru par le fait que chacune d'entre elles a généralement une fonction unique et indépendante de l'objet sur lequel elle intervient, un objet pouvant être par exemple un élément graphique d'un écran de visualisation.

Le but de l'invention est de pallier les inconvénients précités, notamment en permettant aux commandes virtuelles de s'autoadapter au système dans lequel elles sont mises en oeuvre.

A cet effet, l'invention a pour objet un dispositif d'exécution de commandes virtuelles comportant des moyens d'interaction entre un opérateur et un système d'interaction homme-machine, et des moyens d'analyse, les moyens d'interaction fournissant des informations aux moyens d'analyse qui reconnaissent une commande, réalisée par l'opérateur, indiquant une action et un objet désigné sur lequel porte cette action, caractérisé en ce qu'il comporte en outre des moyens de mémorisation des actions exécutables par le système, une action exécutable mémorisée étant fonction au moins d'une commande, d'un moyen d'interaction et d'un objet, les moyens de mémorisation étant reliés aux moyens d'analyse de manière à ce que ceux-ci transmettent à des moyens d'exécution une action à exécuter en fonction au moins de la commande et des moyens d'interaction utilisés par l'opérateur et de l'objet qu'il désigne.

L'invention a pour principaux avantages qu'elle permet d'accroître la rapidité d'exécution des commandes virtuelles, qu'elle améliore l'ergonomie des systèmes d'interaction homme-machine, qu'elle diminue le nombre nécessaire de commandes virtuelles et qu'elle permet notamment d'utiliser des moyens d'interaction non conventionnels tels que la reconnaissance vocale, la reconnaissance gestuelle, l'oculométrie ou la détection de positions par exemple.

D'autres caractéristiques et avantages de l'invention apparaîtront à l'aide de la description qui suit faite en regard des dessins annexés qui représentent :
- la figure 1, un synoptique d'un mode de réalisation possible d'un dispositif selon l'invention ;
- la figure 2, une illustration d'échanges de données ;
- la figure 3, un mode d'utilisation possible du dispositif selon l'invention.

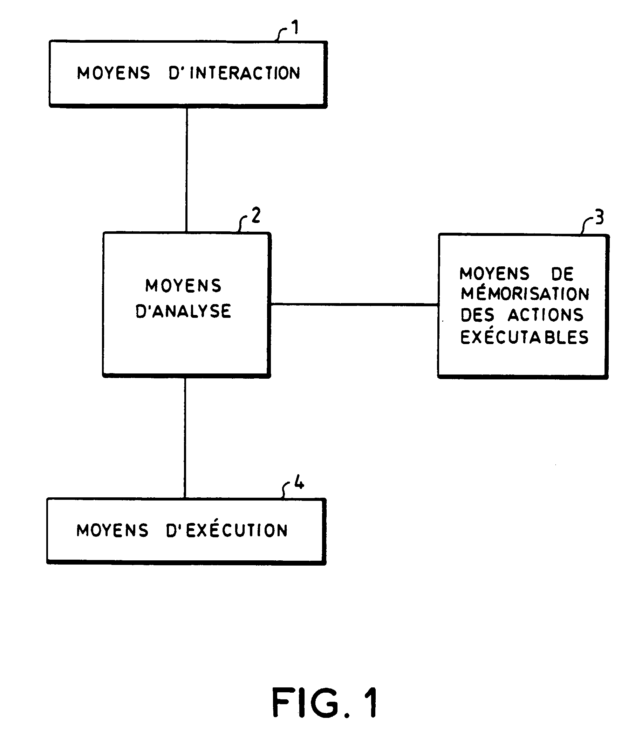

La figure 1 présente un synoptique d'un mode de réalisation possible d'un dispositif selon l'invention. Des moyens d'interaction 1 sont reliés à des moyens d'analyse 2 auxquels ils fournissent des messages. Les moyens d'interaction 1 permettent à un opérateur de dialoguer avec une machine comportant notamment les moyens d'analyse 2. Les moyens d'interaction peuvent être par exemple la voix, le geste, le regard ou la position de l'opérateur associés à des moyens de reconnaissance, tels que la reconnaissance vocale, la reconnaissance gestuelle, l'oculométrie ou la reconnaissance de positions. L'opérateur, en utilisant ces moyens d'interaction, dispose d'un jeu de commandes virtuelles pour agir sur des objets qu'il désigne, les commandes virtuelles indiquant la désignation d'un objet et une action sur cet objet. Dans le cas d'utilisation des moyens d'interaction précités, l'opérateur peut par exemple indiquer l'action de manière vocale et désigner l'objet d'un geste de la main. Un grand nombre de combinaisons et d'utilisation de moyens d'interaction peuvent en effet être mises en oeuvre. Ces combinaisons rendent les commandes multimodales, un mode correspondant à une combinaison ou une utilisation de moyens d'interaction données. Les moyens d'analyse 2 réalisent une analyse syntaxique des messages fournis par les moyens d'interaction 1, puis interprètent ces messages et déterminent le ou les moyens d'interaction d'où proviennent ces messages. Pour un message reçu et interprété, ils ont donc connaissance au moins, de la commande exécutée par l'opérateur, du ou des moyens d'interaction utilisés par l'opérateur pour transmettre la commande, et de l'objet désigné par la commande, c'est-à-dire de l'objet sur lequel porte l'action indiquée par la commande. Des moyens 3 pour mémoriser les actions exécutables par le système sont reliés aux moyens d'analyse 2. Selon l'invention, une action exécutable mémorisée est fonction d'au moins une commande, d'un moyen d'interaction et d'un objet. Les moyens d'analyse 2 ayant connaissance de ces trois paramètres, ils peuvent lire dans les moyens de mémorisation 3 des actions exécutables et indiquer en conséquence à des moyens d'exécution 4, les actions à exécuter. Les actions exécutables mémorisées sont par exemple choisies de manière à doter le système d'interaction homme-machine d'une capacité d'auto-adaptation au contexte de l'évolution de la commande virtuelle, le contexte étant notamment défini par la commande elle-même, par les moyens d'interaction et par l'objet désigné par la commande et sur lequel porte l'action commandée. Cela améliore la souplesse et l'ergonomie du système.

Une commande virtuelle est composée généralement de plusieurs phases qui s'enchaînent séquentiellement. Une commande virtuelle peut comprendre par exemple trois phases, une phase de sélection, une phase de validation et une phase d'action. Selon l'invention, une commande virtuelle possède la capacité d'adapter ses actions en fonction de l'objet qui est sélectionné. Cette adaptation peut se faire en fonction de la nature de l'objet, mais aussi par exemple en fonction de ses propriétés.

A titre d'exemple, la commande suivante "prendre un objet du bout des doigts puis tourner la main autour de l'axe du bras" peut être exécutée. Dans le cas où la commande virtuelle est composée des trois phases précédentes, une fois les phases de sélection et validation terminées, la commande virtuelle exécute parmi les actions exécutables celle qui correspond à l'objet sélectionné. Ainsi, les actions exécutables peuvent par exemple être les suivantes :
- rotation,
- zoom discret,
- zoom continu,
- réglage,
- commutation
et, les moyens d'interaction gestuels étant utilisés, les actions en fonction de l'objet sélectionné peuvent être définies par exemple de la manière suivante :
- si l'objet est un élément graphique simple, l'action est une rotation,
- si l'objet est une fenêtre, l'action est un zoom discret ou continu,
- si l'objet est un potentiomètre rotatif, l'action est un réglage,
- si l'objet est un interrupteur ou un bouton, l'action est une commutation.

Toutes ces actions exécutables sont mémorisées dans les moyens de mémorisation 3.

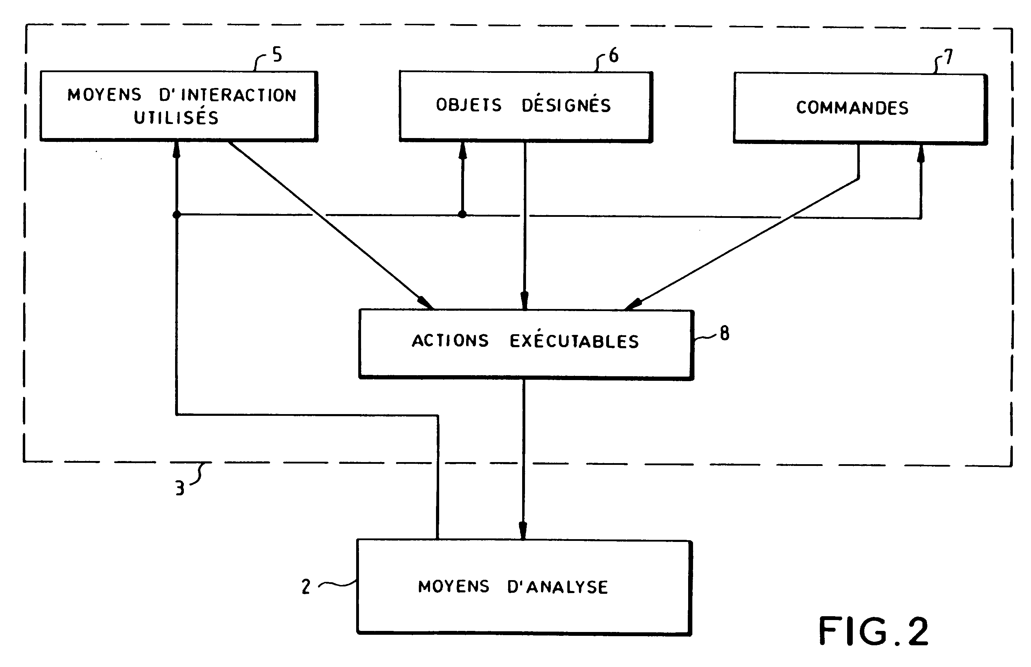

La figure 2 illustre les échanges de données entre ces derniers et les moyens d'analyse 2. Les moyens d'analyse transmettent les moyens d'interaction utilisés 5, les objets désignés 6 et les commandes 7, aux moyens de mémorisation 3. Les trois types de paramètres peuvent par exemple constituer l'entrée d'une table. Ils désignent les actions exécutables 8, ces dernières étant lues par les moyens d'analyse 2. Le sens de la commande est interprétée par les moyens d'analyse 2 après avoir été interprétée de façon syntaxique en reconnaissant son vocabulaire. Les commandes 7 servant à désigner les actions exécutables sont donc une traduction codée des commandes exécutées par l'opérateur, par exemple le geste "prendre un objet du bout des doigts puis tourner la main autour de l'axe" ou toute autre phrase parlée. Les systèmes d'interaction homme-machine peuvent disposer par exemple d'une grande richesse de vocabulaire. En effet, afin de demander un minimum d'efforts de la part de l'utilisateur, notamment en situation critique, les vocabulaires, vocal ou gestuel, sont riches. En conséquence, les commandes virtuelles intègrent un grand nombre de formes de dialogues. Les commandes virtuelles s'accommodent par exemple de dialogues riches pour des situations calmes et de dialogues rapides, de style télégraphique, pour les situations critiques. Dans l'exemple d'application précédent, la commande virtuelle dont le vocabulaire gestuel est "prendre un objet du bout des doigts puis tourner la main autour de l'axe du bras" désigne un élément graphique simple comme objet et recourt aux gestes de la main comme moyens d'interaction, et l'action exécutable désignée est la rotation.

Les moyens d'analyse 2 transmettent une information aux moyens d'exécution 4 qui indique que l'action à exécuter est celle désignée, ici la rotation dans l'exemple cité.

L'invention peut s'appliquer à des commandes virtuelles ayant un ou plusieurs modes de réalisation. Il est possible d'évaluer l'ensemble des combinaisons de moyens d'interaction qui permettent le déroulement des phases d'une commande donnée, ces phases étant par exemple la sélection, la validation et la ou les actions.

Chacune de ces combinaisons définit un mode de réalisation de la commande virtuelle. Selon l'invention, les actions exécutables mémorisées dans les moyens de mémorisation 3 peuvent être aussi fonction du mode de réalisation 1 d'une commande.

A titre d'exemple, il est possible de considérer un système d'interaction homme-machine comportant comme moyens d'interaction d'entrée, c'est-à-dire de l'opérateur vers le système, un système de reconnaissance vocale, un système de reconnaissance gestuelle et un système de détection de la main. Ce système d'interaction peut avoir par exemple un écran de visualisation comme système d'interaction de sortie. Un exemple de commande réalisée peut être par exemple "effacer un objet de l'écran de visualisation". La voix peut servir à sélecter et valider en prononçant le nom de l'objet, la validation étant implicite. Elle peut aussi ordonner des actions, par exemple l'ordre de fermer. La main peut servir à sélecter, en désignant du doigt par exemple. Elle peut aussi valider et ordonner des actions, en produisant des gestes par exemple. De ces possibilités précitées, se déduisent au moins trois modes permettant d'effacer l'objet.

Un premier mode de réalisation de la commande est totalement verbal : la voix dit par exemple "effacer l'objet", la sélection se faisant par le nom de l'objet, la validation étant implicite et l'action étant "effacer".

Un deuxième mode de réalisation de la commande est verbal avec désignation manuelle. L'écran est montré du doigt, ce qui crée un retour visuel indiquant un point désigné, ce point étant sur l'objet désigné par l'opérateur. La voix dit par exemple : "effacer", ce qui valide la commande et crée l'action d'effacer.

Un troisième mode est totalement gestuel. La main s'approche par exemple de l'écran jusqu'à l'apparition du retour visuel précité. Le retour visuel est amené sur l'objet, ce qui réalise la sélection de ce dernier. La validation est par exemple réalisée par fermeture de la main simulant une prise de l'objet sélectionné. Un squelette de l'objet suit alors les mouvements de la main par exemple. Pour réaliser l'action d'effacer l'objet, la main est par exemple éloignée de l'écran puis ouverte.

Pour cette même commande précitée, d'autres modes pourraient être ajoutés, notamment en tenant compte du regard de l'opérateur ou de la posture ou de la position de son corps par exemple.

La multimodalité des commandes permet à l'opérateur d'interagir ou de dialoguer avec le système d'interaction suivant ses préférences. En s'adaptant aux différents modes de réalisation des commandes, le dispositif selon l'invention rend notamment ces dernières plus efficaces et plus rapides d'exécution. Cette adaptation étant réalisée notamment en rendant les actions exécutables mémorisées fonction de ces modes.

Les commandes peuvent aussi être adaptées à des opérateurs, notamment en fonction de leur expérience ou de leur capacité, qu'ils soient novices ou experts par exemple. Un autre paramètre déterminant les actions exécutables mémorisées par les moyens de mémorisation 3 est alors ajouté. Ce paramètre peut être l'expérience, la qualification ou des éléments de la personnalité de l'opérateur par exemple. La spécificité de chaque opérateur peut se déterminer par exemple à travers le vocabulaire vocal ou gestuel qu'il emploie. L'adaptation des commandes aux opérateurs peut se traduire par exemple par un élargissement ou par une restriction du champ de leurs actions.

Selon l'invention, les commandes virtuelles peuvent aussi s'adapter au système d'interaction homme-machine sur lequel elles agissent. A cet effet, les actions exécutables mémorisées sont aussi fonction de l'état du système. Cet état peut être par exemple défini par la combinaison des moyens d'interaction mis en oeuvre appliquée à une action donnée.

Le dialogue entre un opérateur et le système est ainsi notamment sécurisé. En effet la réalisation des commandes en fonction de l'état du système évite l'exécution d'actions parasites inutiles ou inopérantes, affichant de fausses informations, notamment. Le dialogue est ainsi sécurisé par le fait que toute commande que veut exécuter un opérateur aboutit par exemple à une action autre qu'un simple message d'erreurs. Un exemple de situation peut alors être le suivant: un opérateur désire ouvrir une fenêtre, par exemple radar. Il prononce la phrase "ouvrir radar". Or la fenêtre radar est déjà ouverte, mais est masquée par une autre fenêtre. Grâce à l'adaptation de la commande à cet état du système, la commande "ouvrir", au lieu de se terminer par un message d'erreur du type "fenêtre déjà ouverte" par exemple, exécutera l'action "passer la fenêtre radar au premier plan".

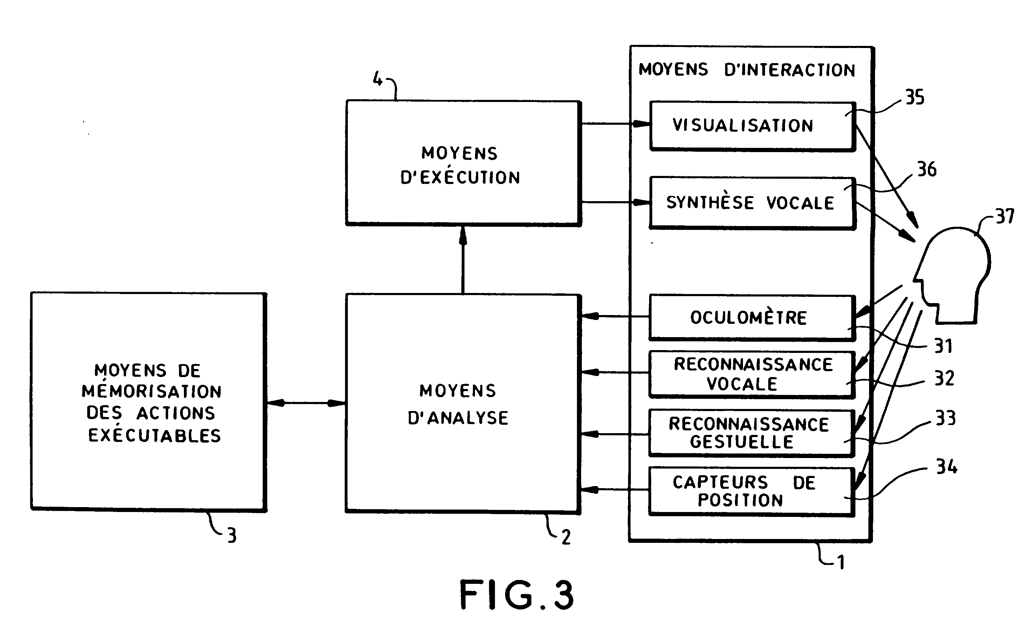

La figure 3 présente un mode d'utilisation possible du dispositif selon l'invention. Le système d'interaction homme-machine est basé sur l'utilisation d'un écran de visualisation et de moyens d'interaction privilégiant des canaux sensoriels et moteurs humains comme la parole, le geste, l'ouïe et la vue notamment. Son utilisation peut permettre la gestion de systèmes complexes, comme un système d'avion par exemple, en assurant notamment un dialogue quasi naturel entre un opérateur et la machine. L'opérateur, au moyen de gestes ou de paroles par exemple, interagit avec l'écran de visualisation qui est un espace contenant des objets sur lesquels vont porter les commandes virtuelles.

Les moyens d'interaction 1 comprennent des moyens d'interaction d'entrée 31, 32, 33, 34 et des moyens d'interaction de sortie 35, 36. Ces derniers comprennent l'écran de visualisation 35 précité et un système de synthèse vocale 36 qui peut délivrer des messages vocaux, des alarmes ou des messages d'erreur par exemple. L'écran de visualisation 35 est par exemple un écran éclairé par un rétroprojecteur à cristaux liquides.

Les moyens d'interaction d'entrée comprennent un oculomètre 31, un système de reconnaissance vocale 32, un système de reconnaissance gestuelle 33 et des capteurs de positions 34. L'oculomètre 31 mesure la direction du regard de l'opérateur 37 par rapport à la tête de ce dernier à l'aide d'une microcaméra analysant le reflet cornéen d'une diode infra-rouge éclairant son oeil droit par exemple. Le système de reconnaissance vocale 32 déclenché par exemple par une détection d'activité, effectue une analyse phonétique du signal après l'avoir séparé en messages et en mots par exemple. Le système de reconnaissance gestuelle 33 reconnaît par exemple les gestes de la main. A cet effet, il est par exemple constitué d'un dispositif à fibre optique équipant un gant porté par la main, permettant de mesurer l'angle de flexion des deux premières articulations de chaque doigt. Un dispositif associé permet par exemple de reconnaître une posture, la forme de la main notamment, parmi un ensemble de postures préalablement enregistrées. Les capteurs de positions 34 sont par exemple des capteurs électromagnétiques couplés à des émetteurs fixes donnant les positions et les orientations de la main et de la tête de l'opérateur 37, ils pourraient cependant capter la position d'autres parties du corps de l'opérateur 37. Tous ces moyens d'interaction d'entrée sont par exemple autonomes et fournissent cycliquement de manière asynchrone des données sur l'activité de l'opérateur 37.

Les moyens d'interaction d'entrée 31, 32, 33, 34 sont reliés aux moyens d'analyse 2 et les moyens d'interaction de sortie 35, 36 sont reliés aux moyens d'exécution 4. Sur la figure 3, le sens des flèches indique le sens des informations échangées.

A titre d'exemple, les commandes virtuelles sur les objets de l'écran interactif peuvent être de cinq types qui sont les suivants :
- un message vocal,
- un message vocal et une désignation manuelle,
- un message vocal et une désignation oculaire,
- un message manuel,
- un message manuel et une désignation oculaire.
Elles peuvent par exemple avoir pour résultat les actions suivantes :
- ouverture d'une fenêtre,
- fermeture d'une fenêtre,
- zoom d'une fenêtre,
- déplacement d'une fenêtre,
- manipulation d'un bouton,
- réglage d'un potentiomètre.

Ces actions sont notamment mémorisées dans les moyens de mémorisation des actions exécutables 3. Ces actions sont par exemple fonction des paramètres précités, à savoir, les moyens d'interaction utilisés, les commandes, les objets, et les modes de réalisation des commandes, les opérateurs ou l'état du système. Par exemple, le geste signifiant "prendre" est interprété comme "déplacer" si l'objet sur lequel il porte est une fenêtre ou comme "marquer" si l'objet sur lequel il porte est un bouton.

## Revendications

1. Dispositif d'exécution de commandes virtuelles comportant des moyens d'interaction (1) entre un opérateur (37) et un système d'interaction homme-machine, et des moyens d'analyse (2), les moyens d'interaction (1) fournissant des informations aux moyens d'analyse (2) qui reconnaissent une commande, réalisée par l'opérateur (37), indiquant une action et un objet désigné sur lequel porte cette action, caractérisé en ce qu'il comporte en outre des moyens de mémorisation (3) des actions exécutables par le système, une action exécutable mémorisée étant fonction au moins d'une commande, d'un moyen d'interaction et d'un objet, les moyens de mémorisation (3) étant reliés aux moyens d'analyse (2) de manière à ce que ceux-ci transmettent à des moyens d'exécution (4) une action à exécuter en fonction au moins de la commande et des moyens d'interaction utilisés par l'opérateur (37) et de l'objet qu'il désigne.

2. Dispositif selon la revendication 1, caractérisé en ce que les actions exécutables mémorisées sont fonction des modes de réalisation des commandes.

3. Dispositif selon l'une quelconque des revendications précédentes, caractérisé en ce que les actions exécutables mémorisées sont fonction de l'opérateur (37).

4. Dispositif selon l'une quelconque des revendications précédentes, caractérisé en ce que les actions exécutables mémorisées sont fonction de l'état du système d'interaction homme-machine.

5. Dispositif selon l'une quelconque des revendications précédentes, caractérisé en ce que les moyens d'interaction (1) comprennent un oculomètre (31), un système de reconnaissance vocale (32), un système de reconnaissance gestuelle (33) et des capteurs de position (34) de l'opérateur (37).

6. Dispositif selon l'une quelconque des revendications précédentes, caractérisé en ce que les commandes portent sur des objets visualisés par un écran (35).

7. Dispositif selon l'une quelconque des revendications précédentes, caractérisé en ce que les commandes agissent sur un système de synthèse vocale (36).

## Patentansprüche

1. Vorrichtung für die Ausführung von virtuellen Befehlen, mit Mitteln (1) für die Wechselwirkung zwischen einer Bedienungsperson (37) und einem Mensch/Maschine-Wechselwirkungssystem, und Analysemitteln (2), wobei die Wechselwirkungsmittel (1) Informationen an die Analysemittel (2) liefern, die einen von der Bedienungsperson (37) erzeugten Befehl erkennen, der eine Aktion und ein bezeichnetes Objekt angibt, auf das sich diese Aktion stützt, dadurch gekennzeichnet, daß sie außerdem Mittel (3) für die Speicherung der vom System ausführbaren Aktionen enthält, wobei eine gespeicherte, ausführbare Aktion wenigstens von einem Befehl, von einem Wechselwirkungsmittel und von einem Objekt abhängt, wobei die Speichermittel (3) mit den Analysemitteln (2) in der Weise verbunden sind, daß diese an die Ausführungsmittel (4) eine auszuführende Aktion in Abhängigkeit wenigstens vom Befehl und von den von der Bedienungsperson (37) verwendeten Wechselwirkungsmitteln sowie von dem von ihr bezeichneten Objekt übertragen.

2. Vorrichtung nach Anspruch 1, dadurch gekennzeichnet, daß die gespeicherten, ausführbaren Aktionen von den Erzeugungsarten der Befehle abhängen.

3. Vorrichtung nach irgendeinem der vorangehenden Ansprüche, dadurch gekennzeichnet, daß die gespeicherten, ausführbaren Aktionen von der Bedienungsperson (37) abhängen.

4. Vorrichtung nach irgendeinem der vorangehenden Ansprüche, dadurch gekennzeichnet, daß die gespeicherten, ausführbaren Aktionen vom Zustand des Mensch/Maschine-Wechselwirkungssystems abhängen.

5. Vorrichtung nach irgendeinem der vorangehenden Ansprüche, dadurch gekennzeichnet, daß die Wechselwirkungsmittel (1) ein Okulometer (31), ein Spracherkennungssystem (32), ein Gebärdenerkennungssystem (33) und Sensoren (34) für die Position der Bedienungsperson (37) enthalten.

6. Vorrichtung nach irgendeinem der vorangehenden Ansprüche, dadurch gekennzeichnet, daß sich die Befehle auf auf einem Bildschirm (35) angezeigte Objekte stützen.

7. Vorrichtung nach irgendeinem der vorangehenden Ansprüche, dadurch gekennzeichnet, daß die Befehle auf ein Sprachsynthesesystem (36) einwirken.

## Claims

1. Device for the execution of virtual commands comprising means of interaction (1) between an operator (37) and a man/machine interaction system, and means of analysis (2), the interaction means (1) giving information elements to the means of analysis (2) which recognize a command, implemented by the operator (37), indicating an action and a designated object to which this action relates, characterized in that this device further comprises means (3) of memorization of the actions executable by the system, a memorized executable action being a function at least of one command, one means of interaction and one object, the means of memorization (3) being connected to the means of analysis (2) so that these means of analysis send execution means (4) an action to be executed as a function at least of the command and the interaction means used by the operator (37) and the object that he designates.

2. Device according to Claim 1, characterized in that the memorized executable actions are a function of the modes of implementation of the commands.

3. Device according to any one of the preceding claims, characterized in that the memorized executable actions are a function of the operator (37).

4. Device according to any one of the preceding claims, characterized in that the memorized executable actions are a function of the state of the man/machine interaction system.

5. Device according to any one of the preceding claims, characterized in that the interaction means (1) comprise an oculometer (31), a system of voice recognition (32), a system of gestural recognition (33) and sensors (34) of the position of the operator (37).

6. Device according to any one of the preceding claims, characterized in that the commands relate to objects displayed by a screen (35).

7. Device according to any one of the preceding claims, characterized in that the commands act on a system of voice synthesis (36).
